# EUROPEAN PATENT SPECIFICATION

(11) **EP 3 931 851 B1**
(45) Date of publication and mention of the grant of the patent: **28.02.2024**
(21) Application number: 19922488.2
(22) Date of filing: 29.03.2019
(51) Int. Cl.: H01H 9/54

(54) **HYBRID CIRCUIT BREAKER, HYBRID CIRCUIT BREAKING SYSTEM, AND CIRCUIT BREAKING METHOD**
HYBRIDER SCHUTZSCHALTER, HYBRIDES AUSSCHALTSYSTEM UND AUSSCHALTVERFAHREN
DISJONCTEUR HYBRIDE, SYSTÈME DE COUPE-CIRCUIT HYBRIDE ET PROCÉDÉ DE COUPE-CIRCUIT

(43) Date of publication of application: 05.01.2022
(73) Proprietor: Siemens Aktiengesellschaft, 80333 München (DE)
(72) Inventor: DU, Feng, Shanghai 200120 (CN); CHEN, Wei Gang, Shanghai 200120 (CN)
(74) Representative: Isarpatent
(86) International application number: PCT/CN2019/080553
(87) International publication number: WO 2020/198985

(56) References cited:
- WO-A1-2011/044928
- US-A1- 2014 078 622

## Description

### BACKGROUND

### Technical Field

The present invention relates to the field of circuit breakers, and in particular, to a hybrid circuit breaker.

### Related Art

Now, solid state circuit breakers (SSCBs) have been increasingly widely applied. An SSCB is formed by semiconductors, and has advantages of fast breaking, long contact life, and high intelligence, and therefore has a high application potential in the low-voltage protection field. However, if a large fault current occurs in a source branch having a converter, a semiconductor rectifier diode in the converter may be damaged.

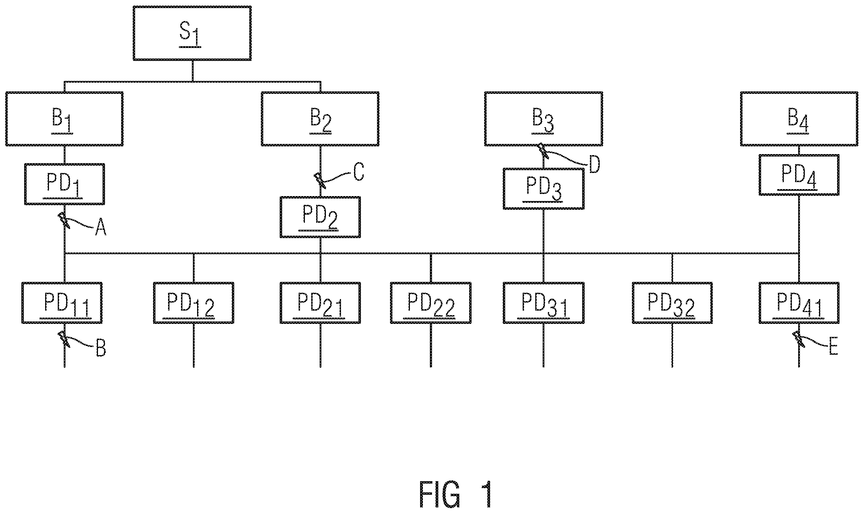

A DC power system shown in FIG. 1 includes an AC power supply S₁, where an AC power supply S₂ supplies power to two source branches B₁ and B₂ connected in parallel, and the source branches B₁ and B₂ respectively have an AC/DC converter. Specifically, the source branches B₁ and B₂ are further respectively connected in series to a protection apparatus PD₁ and a protection apparatus PD₂, where a first parallel branch, a second parallel branch, a third parallel branch, and a fourth parallel branch are further exist under the protection apparatuses PD₁ and PD₂. The first parallel branch has a protection apparatus PD₁₁, the second parallel branch has a protection apparatus PD₁₂, the third parallel branch has a protection apparatus PD₂₁, and the fourth parallel branch has a protection apparatus PD₂₂. The DC power system further includes a battery source B₃ and a PV power supply B₄, where the battery source B₃ and the PV power supply B₄ are further respectively connected in series to a protection apparatus PD₃ and a protection apparatus PD₄. A fifth parallel branch, a sixth parallel branch, and a seventh parallel branch further exist under the protection apparatuses PD₃ and PD₄. The fifth parallel branch is connected in series to a protection apparatus PD₃₁, the sixth parallel branch is connected in series to a protection apparatus PD₃₂, and the seventh parallel branch is connected in series to a protection apparatus PD₄₁.

As shown in FIG. 1, when a failure occurs in nodes A, B, C, D, and E, a fault current flows through a free-wheeling diode (free-wheeling diode) of a converter at an active frontend (AFE), and the rectifier diode in the converter may be damaged. Therefore, to disconnect the current before the fault current reaches a breakdown current of the diode, the protection apparatus needs to have a fast reaction speed. However, a rated current of the source branch is always relatively large. Therefore, if the SSCB is applied, the costs are excessively high.

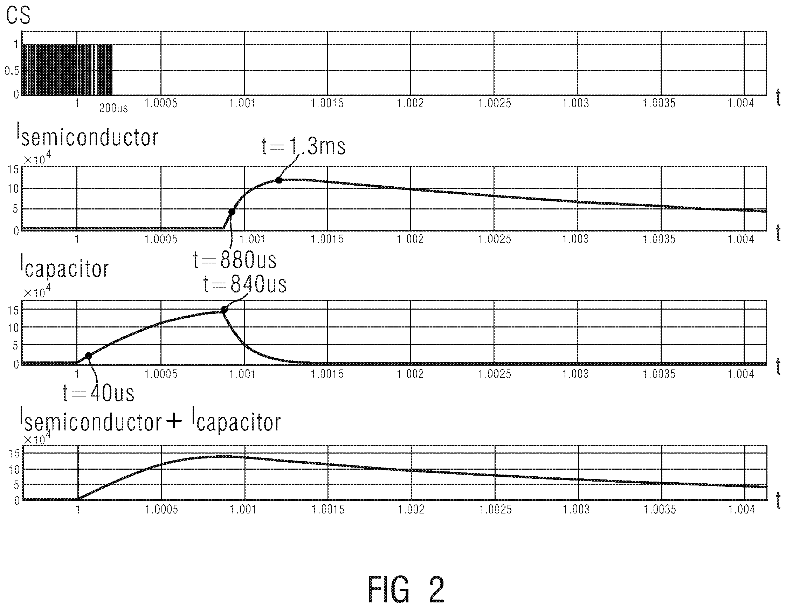

For example, when a failure occurs in node A, it is assumed that a fault resistance R_{fault}=0.00001 Ω, and the protection apparatus PD₁ is an electronical mechanical circuit breaker (EMCB). As shown in FIG. 2, the horizontal coordinate is time t, the vertical coordinate CS is a pulse control signal, the vertical coordinate I_{semiconductor} is a current flowing through a semiconductor rectifier diode in a converter of the source branch B₁, the vertical coordinate I_{capacitor} is a current flowing through a straight-line bus voltage of the converter, and the vertical coordinate I_{sc} is a current flowing through the protection apparatus PD₁, where the current flowing through the protection apparatus PD₁ is the sum of I_{semiconductor} and I_{capacitor}. The pulse control signal CS is a control signal of an AC/DC converter of the source branch B₁, and skips between 0 and 1 according to a certain frequency. As shown in FIG. 2, after the failure occurs, when time t=200 µs, the pulse control signal CS is completely disconnected. When time t<880 µs, I_{semiconductor}<5In=3460 A, and when t=1.3 ms, I_{semiconductor} reaches a current peak, the current peak is close to 122 KA, and the device may be damaged. In is the rated current. When t=40 µs around, I_{capacitor}> 10 KA, and when t=840 µs around, I_{capacitor} reaches the current peak, and the current peak is close to 150 KA. Obviously, when the EMCB is applied, if the fault current is not interrupted in 1 ms, the AFE has a relatively high risk. That is, the conventional circuit breaker has a slow speed, and is already large enough before disconnecting the fault current.

Therefore, neither the SSCB nor the EMCB in this case can be applied to a source branch having a converter or an active circuit.

WO 2011/044928 A1 describes a hybrid circuit breaker, comprising a first circuit that comprises: a main current path which comprises a mechanical switch element, at least one commutation path arranged in parallel with the main current path a comprising a controllable semi-conductor switch element.

### SUMMARY

A first aspect of the present invention provides a hybrid circuit breaker, including: a semiconductor circuit breaker, connected between a first output end of a converter of a power supply or a source branch and a damping module; a first mechanical circuit breaker, connected in parallel to the semiconductor circuit breaker; an energy absorber, connected in parallel to the semiconductor circuit breaker; and a control apparatus, coupled to the semiconductor circuit breaker and the first mechanical circuit breaker, where when a current flowing through the converter is greater than its safe current, the control apparatus controls the first mechanical circuit breaker to be disconnected, and controls the semiconductor circuit breaker to be closed.

Further, the hybrid circuit breaker further includes a protection apparatus, where a first input end of the protection apparatus is connected to the other end of the damping module, and a second input end of the protection apparatus is coupled to a second output end of the converter.

According to the invention, the converter includes a capacitor, where the capacitor is connected between a second output end of the converter and the damping module, a first connection point exists between the first mechanical circuit breaker and the damping module, and a first current sensor is further connected between the first connection point and the capacitor, where when the first current sensor senses that a discharge current of the capacitor is greater than its threshold, it is determined that the current flowing through the converter is greater than its safe current.

Further, the hybrid circuit breaker further includes a circuit breaker, where a first connection point exists between the first mechanical circuit breaker and the damping module, the circuit breaker is connected between the first connection point and a second output end of the converter, and a second current sensor is further connected between the first mechanical circuit breaker and the first connection point, where when a fault current sensed by the second current sensor is greater than its threshold, it is determined that the current flowing through the converter is greater than its safe current.

Further, the circuit breaker includes any one of the following: a second mechanical circuit breaker; a diode, where a positive electrode of the diode is coupled to a second output end of the power supply or the source branch, and a negative electrode of the diode is connected to the first connection point; and a semiconductor rectifier circuit.

A second aspect of the present invention provides a circuit breaking method, where the circuit breaking method is performed by the hybrid circuit breaker according to the first aspect of the present invention, and the circuit breaking method includes the following step:
when the current flowing through the converter is greater than its safe current, triggering the control apparatus to control the first mechanical circuit breaker to be disconnected, and control the semiconductor circuit breaker to be closed.

Further, the converter includes a capacitor, the capacitor is connected between a second output end of the converter and the damping module, a first connection point exists between the first mechanical circuit breaker and the damping module, and a first current sensor is further connected between the first connection point and the capacitor, where the circuit breaking method further includes the following step: when the first current sensor senses that a discharge current of the capacitor is greater than its threshold, determining that the current flowing through the converter is greater than its safe current.

Further, the hybrid circuit breaker further includes a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, where the circuit breaking method further includes the following step: when a fault current sensed by the second current sensor is greater than its threshold, determining that the current flowing through the converter is greater than its safe current.

A third aspect of the present invention provides a hybrid circuit breaking system, where the circuit breaking system includes the hybrid circuit breaker according to the first aspect of the present invention, and the hybrid circuit breaking system includes: a processor; and a memory coupled to the processor, where the memory stores instructions, and when being executed by the processor, the instructions make the electronic device execute an action, and the action includes:
when the current flowing through the converter is greater than its safe current, triggering the control apparatus to control the first mechanical circuit breaker to be disconnected, and control the semiconductor circuit breaker to be closed.

Further, the converter includes a capacitor, the capacitor is connected between a second output end of the converter and the damping module, a first connection point exists between the first mechanical circuit breaker and the damping module, and a first current sensor is further connected between the first connection point and the capacitor, where the action further includes: when the first current sensor senses that a discharge current of the capacitor is greater than its threshold, determining that the current flowing through the converter is greater than its safe current.

Further, the hybrid circuit breaker further includes a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, where the action further includes: when a fault current sensed by the second current sensor is greater than its threshold, determining that the current flowing through the converter is greater than its safe current.

In the hybrid circuit breaker provided in the present invention, a fault current can be interrupted before reaching a safe threshold, and the hybrid circuit breaker provided in the present invention has lower manufacturing costs than an SSCB.

### BRIEF DESCRIPTION OF THE DRAWINGS

FIG. 1 is a schematic structural diagram of a DC power system;
FIG. 2 is a simulation curve diagram of a DC power system when a failure occurs in node A;
FIG. 3 is a schematic circuit connection diagram of a hybrid circuit breaker according to a specific embodiment of the present invention;
FIG. 4 is a schematic circuit connection diagram of a hybrid circuit breaker according to another specific embodiment of the present invention; and
FIG. 5 is a schematic circuit connection diagram of a hybrid circuit breaker according to another specific embodiment of the present invention.

### DETAILED DESCRIPTION

The following describes specific implementations of the present invention with reference to the accompanying drawings.

To resolve the foregoing problem, the present invention provides a hybrid circuit breaker, including a semiconductor circuit breaker, a first mechanical circuit breaker, an energy absorber, and a control apparatus. Specifically, the semiconductor circuit breaker is connected between a first output end of a converter of a power supply or a source branch and a damping module, the first mechanical circuit breaker is connected in parallel to the semiconductor circuit breaker, and the energy absorber is connected in parallel to the semiconductor circuit breaker. The control apparatus is coupled to the semiconductor circuit breaker, where when a current flowing through the converter is greater than its safe current, the control apparatus controls the first mechanical circuit breaker to be disconnected, and controls the semiconductor circuit breaker to be closed.

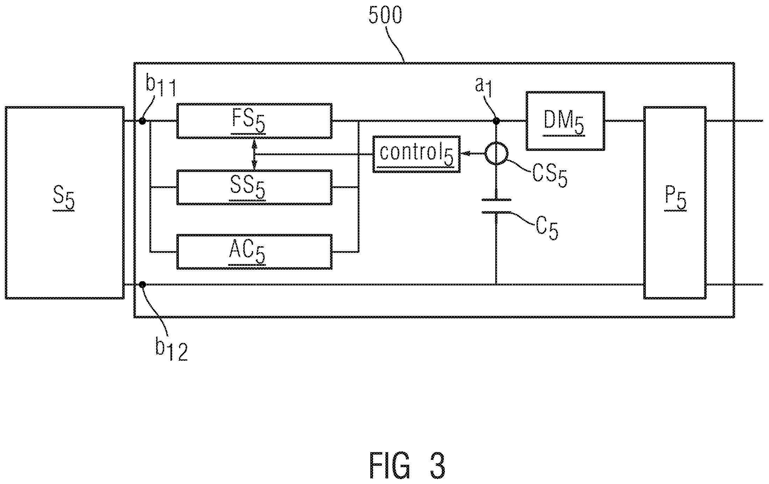

FIG. 3 is a schematic circuit connection diagram of a hybrid circuit breaker according to a specific embodiment of the present invention. As shown in FIG. 3, the hybrid circuit breaker is applied to a DC power system having a power supply S₅ of a semiconductor, where the power supply S₅ is optionally an AC power supply, a battery source, a PV power supply, or the like, and the semiconductor includes a rectifier diode or a free-wheeling diode in the converter. The power supply S₅ is an AFE. In the solution shown in FIG. 3, the hybrid circuit breaker uses a capacitor C₅ in a converter of the power supply S₅. Specifically, the protection apparatus 500 in FIG. 3 includes a semiconductor circuit breaker SS₅, a first mechanical circuit breaker FS₅, an energy absorber AC₅, and a control apparatus controls. Specifically, the semiconductor circuit breaker SS₅ is connected between a first output end b₁₁ of the converter of the power supply S₅ and a damping module DM₅, the first mechanical circuit breaker FS₅ is connected in parallel to the semiconductor circuit breaker SS₅, and the energy absorber AC₅ is connected in parallel to the semiconductor circuit breaker SS₅. The control apparatus controls is coupled to the semiconductor circuit breaker SS₅ and the first mechanical circuit breaker FS₅, where when a current flowing through the converter is greater than its safe current, the control apparatus controls controls the first mechanical circuit breaker FS₅ to be disconnected, and controls the semiconductor circuit breaker SS₅ to be closed. The protection apparatus 500 further includes a protection apparatus P₅, and particularly, an EMCB. A first input end of the protection apparatus P₅ is connected to the other end of the damping module DM₅, and a second input end of the protection apparatus P₅ is coupled to a second output end b₁₂ of the converter of the power supply S₅. The protection apparatus P₅ is configured to prevent a semiconductor in the power supply S₅ from generating a leakage current. An output end of the protection apparatus P₅ is connected to a load.

In an application scenario in which the fault current is interrupted, a main problem is how to protect an SSCB itself. That is, after the operation of performing failure interruption is triggered, energy stored in a circuit needs to be released, and a release path needs to be provided. The energy absorber AC₅ is configured to provide an energy release path.

Specifically, as shown in FIG. 3, the converter of the power supply S₅ includes a capacitor C₅, the capacitor C₅ is connected between the second output end b₁₂ of the converter and the damping module DMs. A first connection point a₁ exists between the first mechanical circuit breaker FS₅ and the damping module DM₅, and a first current sensor CS₅ is further connected between the first connection point a₁ and the capacitor C₅. When the first current sensor CS₅ senses that a discharge current of the capacitor C₅ is greater than its threshold C₅, it is determined that the current flowing through the converter is greater than its safe current, and the control apparatus controls controls the first mechanical circuit breaker FS₅ to be disconnected, and controls the semiconductor circuit breaker SS₅ to be closed.

In this embodiment, the discharge current of the capacitor C₅ is regarded as a predictive current whether a fault current can burn a diode of the converter. In a normal case, the first mechanical circuit breaker FS₅ is closed, and the semiconductor circuit breaker SS₅ is disconnected. The disconnection or closing of the first mechanical circuit breaker FS₅ and the semiconductor circuit breaker SS₅ is mainly based on a current flowing through a DC side capacitor, that is, the sum of currents respectively flowing through the capacitor C₅ and the converter. Particularly, the current sensor CS₅ is an AC sensor. Specifically, the fault current is from the power supply S₅ to the fault position, that is, a load flow from the first output end b₁₁ of the power supply S₅ to the output end of the protection apparatus P₅, and the discharge current of the capacitor C₅ is used as the predictive current of the converter. Once the discharge current of the capacitor C₅ is greater than its threshold, it means that the current flowing through the converter may exceed its safe threshold in the future several milliseconds (ms). Therefore, the control apparatus controls controls the first mechanical circuit breaker FS₅ to be disconnected immediately, and controls the semiconductor circuit breaker SS₅ to be closed immediately, to bypass the fault current. That is, the fault current is guided from an original path in the direction from the power supply S₅ to the first mechanical circuit breaker FS₅ to the direction from the power supply S₅ to the semiconductor circuit breaker SS₅.

The minimum disconnected time of the first mechanical circuit breaker FS₅ is 500 µs.

In this embodiment, when the current flowing through the converter is normal, the first mechanical circuit breaker FS₅ is closed. Once the current flowing through the converter exceeds a safe rated value, the first mechanical circuit breaker FS₅ is disconnected. This is more easily designed, and this embodiment does not need other isolated mechanical switches. The control apparatus controls is completely based on an analog circuit.

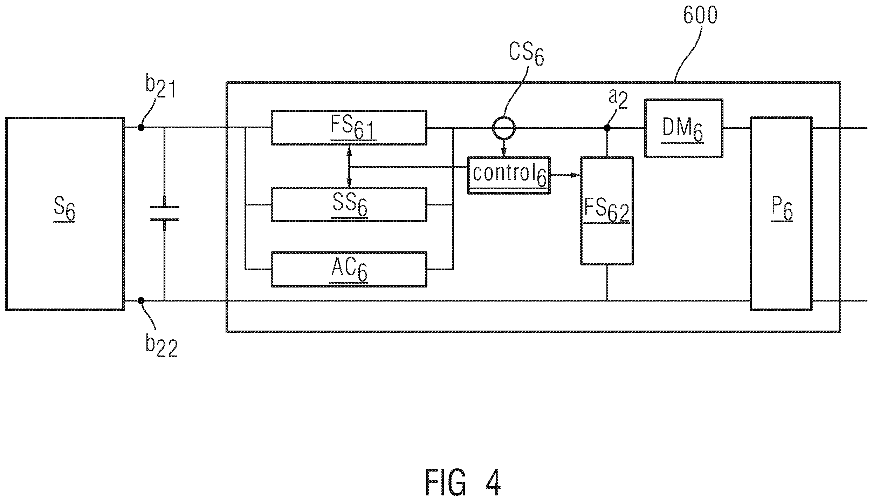

FIG. 4 is a schematic circuit connection diagram of a hybrid circuit breaker according to another specific embodiment of the present invention. As shown in FIG. 4, the hybrid circuit breaker is applied to a DC power system having a power supply S₆ of a semiconductor, where the power supply S₆ is optionally an AC power supply, a battery source, a PV power supply, or the like, and the semiconductor includes a rectifier diode or a free-wheeling diode in a converter. The power supply S₆ is an AFE. Different from the foregoing embodiment, the hybrid circuit breaker provided in this embodiment does use the capacitor C₅ in the converter of the power supply S₆. Specifically, the protection apparatus 600 in FIG. 4 includes a semiconductor circuit breaker SS₆, a first mechanical circuit breaker FS₆₁, an energy absorber AC₆, a control apparatus control₆, and a second mechanical circuit breaker FS₆₂. Specifically, the semiconductor circuit breaker SS₆ is connected between a first output end b₂₁ of the converter of the power supply S₆ and a damping module DM₆, the first mechanical circuit breaker FS₆₁ is connected in parallel to the semiconductor circuit breaker SS₆, and the energy absorber AC₆ is connected in parallel to the semiconductor circuit breaker SS₆. The control apparatus control₆ is coupled to the semiconductor circuit breaker SS₆ and the first mechanical circuit breaker FS₆₁, where when a current flowing through the converter is greater than its safe current, the control apparatus control₆ controls the first mechanical circuit breaker FS₆₁ to be disconnected, and controls the semiconductor circuit breaker SS₆ to be closed. The hybrid circuit breaker further includes a second mechanical circuit breaker FS₆₂, where a first connection point a₂ exists between the first mechanical circuit breaker FS₆₁ and the damping module DM₆, the second mechanical circuit breaker FS₆₂ is connected between the first connection point a₂ and a second output end b₂₂ of the converter. A second current sensor CS₆ is further connected between the first mechanical circuit breaker FS₆₁ and the first connection point a₂. When a fault current sensed by the second current sensor CS₆ is greater than its threshold, it is determined that the current flowing through the converter is greater than its safe current.

The protection apparatus 600 further includes a protection apparatus P₆, and particularly, an EMCB. A first input end of the protection apparatus P₆ is connected to the other end of the damping module DM₆, and a second input end of the protection apparatus P₆ is coupled to the second output end b₂₂ of the converter of the power supply S₆. The protection apparatus P₆ is configured to prevent a semiconductor in the power supply S₆ from generating a leakage current. An output end of the protection apparatus P₆ is connected to a load.

In an application scenario in which the fault current is interrupted, a main problem is how to protect an SSCB itself. That is, after the operation of performing failure interruption is triggered, energy stored in a circuit needs to be released, and a release path needs to be provided. The energy absorber AC₆ is configured to provide an energy release path.

The first mechanical circuit breaker FS₆₁ is parallel to the semiconductor circuit breaker SS₆ and the energy absorber AC₆, and serialized by using a source bus. The second mechanical circuit breaker FS₆₂ is connected between a plus bus and a minus bus.

Particularly, the second mechanical circuit breaker FS₆₂ may also be replaced with another circuit device that can perform its functions, for example, a diode. The diode is backward connected, that is, a positive electrode of the diode is coupled to a second output end of the power supply or the source branch, and a negative electrode of the diode is connected to the first connection point. Optionally, the second mechanical circuit breaker FS₆₂ may also be replaced with a semiconductor rectifier circuit. The damping module DM₆ has an inductance coefficient, and is serialized by using a source bus.

Specifically, in a normal case, the first mechanical circuit breaker FS₆₁ is closed, and controls the semiconductor circuit breaker SS₅ to be disconnected, and the second mechanical circuit breaker FS₆₂ to be disconnected. When the fault current exceeds the safe value, the control apparatus control₆ determines a discharge current based on a control algorithm. Specifically, when the fault current exceeds its threshold, the control apparatus control₆ controls the second mechanical circuit breaker FS₆₂ to be closed, where the control apparatus control₆ controls the second mechanical circuit breaker FS₆₂ to be closed in 500 us. When the current falls back to a value range in which the current may be interrupted by disconnecting the first mechanical circuit breaker FS₆₁, the entire system may be cut off by the first mechanical circuit breaker FS₆₁, where the control apparatus control₆ controls the first mechanical circuit breaker FS₆₁ to be closed in 1 ms. In addition, the semiconductor circuit breaker SS₅ and the energy absorber AC₆ parallel to the first mechanical circuit breaker FS₆₁ are switched in a closed and disconnected state to complete correct current commutation.

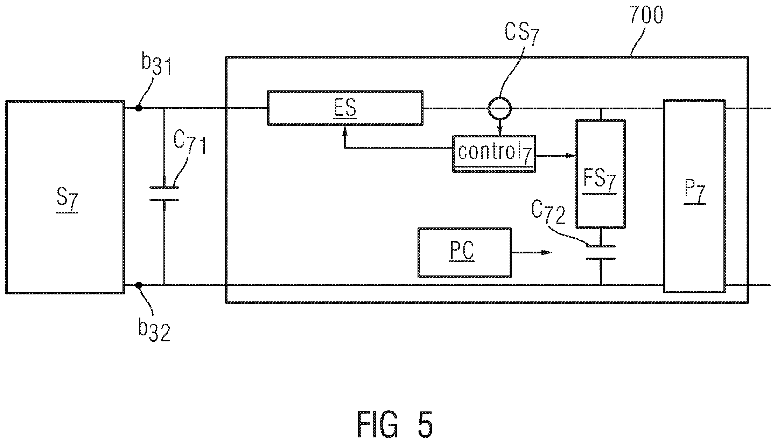

FIG. 5 is a schematic circuit connection diagram of a hybrid circuit breaker according to another specific embodiment of the present invention. As shown in FIG. 5, the hybrid circuit breaker is applied to a DC power system having a power supply S₇ of a semiconductor, where the power supply S₇ is optionally an AC power supply, a battery source, a PV power supply, or the like, and the semiconductor includes a rectifier diode or a free-wheeling diode in a converter. The power supply S₇ is an AFE. Different from the foregoing embodiment, the hybrid circuit breaker provided in this embodiment uses an EMCB ES. Specifically, the protection apparatus 700 in FIG. 5 includes an EMCB ES, a mechanical circuit breaker FS₇, a control apparatus control₇, a pump circuit PC, and a second capacitor C₇₂. The protection apparatus 700 further includes a protection apparatus P₇, and particularly, an EMCB. The protection apparatus P₇ is configured to prevent a semiconductor in the power supply S₇ from generating a leakage current. An output end of the protection apparatus P₇ is connected to a load. The first capacitor C₇₁ is a capacitor of the converter in the power supply S₇, and is connected in parallel to the power supply S₇.

Specifically, the EMCB ES is connected to a first output end b₃₁ of the power supply S₇, and the other end of the EMCB ES is connected to a current sensor CS₇.A parallel branch exists between the first output end b₃₁ and a second output end b₃₂ of the power supply S₇, and the parallel branch is formed by the mechanical circuit breaker FS₇ and the second capacitor C₇₂ connected in series. The control apparatus control₇ is respectively coupled to the EMCB ES and the mechanical circuit breaker FS₇, and the control apparatus control₇ is driven by a signal of the current sensor CS₇.

In an application scenario in which the fault current is interrupted, a main problem is how to protect an SSCB itself. That is, after the operation of performing failure interruption is triggered, energy stored in a circuit needs to be released, and a release path needs to be provided. The energy absorber AC₇ is configured to provide an energy release path.

The closed time of the mechanical circuit breaker FS₇ is 500 µs. Parameters of the second capacitor C₇₂ can be adjusted according to an actual case, and the pump circuit PC is designed to adjust its initial voltage. The control apparatus control₇ controls a fast mechanical switch according to whether it is determined that a discharge current of the first capacitor C₇₁ of the converter reaches a first threshold, and interrupts the entire system according to a second threshold.

A second aspect of the present invention provides a circuit breaking method, where the circuit breaking method is performed by the hybrid circuit breaker according to the first aspect of the present invention, and the circuit breaking method includes the following step:
when the current flowing through the converter is greater than its safe current, triggering the control apparatus to control the first mechanical circuit breaker to be disconnected, and control the semiconductor circuit breaker to be closed.

Further, the converter includes a capacitor, where the capacitor is connected between a second output end of the converter and the damping module, a first connection point exists between the first mechanical circuit breaker and the damping module, and a first current sensor is further connected between the first connection point and the capacitor, where the circuit breaking method further includes the following step: when the first current sensor senses that a discharge current of the capacitor is greater than its threshold, determining that the current flowing through the converter is greater than its safe current.

Further, the hybrid circuit breaker further includes a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, where the circuit breaking method further includes the following step: when a fault current sensed by the second current sensor is greater than its threshold, determining that the current flowing through the converter is greater than its safe current.

A third aspect of the present invention provides a hybrid circuit breaking system, where the circuit breaking system includes the hybrid circuit breaker according to the first aspect of the present invention, and the hybrid circuit breaking system includes: a processor; and a memory coupled to the processor, where the memory stores instructions, and when being executed by the processor, the instructions make the electronic device execute an action, and the action includes:
when the current flowing through the converter is greater than its safe current, triggering the control apparatus to control the first mechanical circuit breaker to be disconnected, and control the semiconductor circuit breaker to be closed.

Further, the converter includes a capacitor, the capacitor is connected between a second output end of the converter and the damping module, a first connection point exists between the first mechanical circuit breaker and the damping module, and a first current sensor is further connected between the first connection point and the capacitor, where the action further includes: when the first current sensor senses that a discharge current of the capacitor is greater than its threshold, determining that the current flowing through the converter is greater than its safe current.

Further, the hybrid circuit breaker further includes a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, where the action further includes: when a fault current sensed by the second current sensor is greater than its threshold, determining that the current flowing through the converter is greater than its safe current.

In the hybrid circuit breaker provided in the present invention, a fault current can be interrupted before reaching a safe threshold, and the hybrid circuit breaker provided in the present invention has lower manufacturing costs than an SSCB.

## Claims

1. A hybrid circuit breaker, comprising:
a semiconductor circuit breaker (SS₅), connected between a first output end (b₁₁) of a converter of a power supply (S₅) or a source branch and a damping module (DMs);
a first mechanical circuit breaker (FS₅), connected in parallel to the semiconductor circuit breaker (SS₅);
an energy absorber (ACs), connected in parallel to the semiconductor circuit breaker (SS₅); and
a control apparatus (controls), coupled to the semiconductor circuit breaker (SS₅) and the first mechanical circuit breaker (FSs), wherein when a current flowing through the converter is greater than its safe current, the control apparatus (controls) controls the first mechanical circuit breaker (FS₅) to be disconnected, and controls the semiconductor circuit breaker (SS₅) to be closed
**characterised in that**
the converter comprises a capacitor (Cs), the capacitor (Cs) is connected between a second output end (b₁₂) of the converter and the damping module (DM₅), a first connection point (a₁) exists between the first mechanical circuit breaker (FS₅) and the damping module (DM₅), and a first current sensor (CS₅) is further connected between the first connection point (a₁) and the capacitor (Cs), wherein
when the first current sensor (CS₅) senses that a discharge current of the capacitor (Cs) is greater than its threshold, it is determined that the current flowing through the converter is greater than its safe current.

2. The hybrid circuit breaker according to claim 1, further comprising a protection apparatus (Ps), wherein a first input end of the protection apparatus (P₅) is connected to the other end of the damping module (DM₅), and a second input end of the protection apparatus (P₅) is coupled to a second output end (b₁₂) of the converter.

3. The hybrid circuit breaker according to claim 1, further comprising a circuit breaker, wherein a first connection point (a₂) exists between the first mechanical circuit breaker (FS₆₁) and the damping module (DM₆), the circuit breaker is connected between the first connection point (a₂) and a second output end (b₂₂) of the converter, and a second current sensor (CS₆) is further connected between the first mechanical circuit breaker (FS₆₁) and the first connection point (a₂), wherein
when a fault current sensed by the second current sensor (CS₆) is greater than its threshold, it is determined that the current flowing through the converter is greater than its safe current.

4. The hybrid circuit breaker according to claim 3, wherein the circuit breaker comprises any one of the following:
a second mechanical circuit breaker (FS₆₂);
a diode, wherein a positive electrode of the diode is coupled to a second output end of the power supply or the source branch, and a negative electrode of the diode is connected to the first connection point; and
a semiconductor rectifier circuit.

5. A circuit breaking method, wherein the circuit breaking method is performed by the hybrid circuit breaker according to any one of claims 1 to 4, and the circuit breaking method comprises the following step:
when the current flowing through the converter is greater than its safe current, triggering the control apparatus to control the first mechanical circuit breaker to be disconnected, and control the semiconductor circuit breaker to be closed.

6. The circuit breaking method according to claim 5, wherein the converter comprises a capacitor, the capacitor is connected between a second output end of the converter and the damping module, a first connection point exists between the first mechanical circuit breaker and the damping module, and a first current sensor is further connected between the first connection point and the capacitor, wherein
the circuit breaking method further comprises the following step:
when the first current sensor senses that a discharge current of the capacitor is greater than its threshold, determining that the current flowing through the converter is greater than its safe current.

7. The circuit breaking method according to claim 5, wherein the hybrid circuit breaker further comprises a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, wherein
the circuit breaking method further comprises the following step:
when the fault current sensed by the second current sensor is greater than its threshold, determining that the current flowing through the converter is greater than its safe current.

8. A hybrid circuit breaking system, wherein the circuit breaking system comprises the hybrid circuit breaker according to any one of claims 1 to 4, and the hybrid circuit breaking system comprises:
a processor; and
a memory coupled to the processor, wherein the memory stores instructions, and when being executed by the processor, the instructions make the electronic device execute an action, and the action comprises:
when the current flowing through the converter is greater than its safe current, triggering the control apparatus to control the first mechanical circuit breaker to be disconnected, and control the semiconductor circuit breaker to be closed.

9. The hybrid circuit breaking system according to claim 8, wherein the converter comprises a capacitor, the capacitor is connected between a second output end of the converter and the damping module, a first connection point exists between the first mechanical circuit breaker and the damping module, and a first current sensor is further connected between the first connection point and the capacitor, wherein
the action further comprises:
when the first current sensor senses that a discharge current of the capacitor is greater than its threshold, determining that the current flowing through the converter is greater than its safe current.

10. The hybrid circuit breaking system according to claim 8, wherein the hybrid circuit breaker further comprises a circuit breaker, a first connection point exists between the first mechanical circuit breaker and the damping module, the circuit breaker is connected between the first connection point and a second output end of the converter, and a second current sensor is further connected between the first mechanical circuit breaker and the first connection point, wherein
the action further comprises:
when a fault current sensed by the second current sensor is greater than its threshold, determining that the current flowing through the converter is greater than its safe current.

## Patentansprüche

1. Hybrider Schutzschalter, der Folgendes umfasst:
einen Halbleiter-Schutzschalter (SS₅), der zwischen einem ersten Ausgangsende (bn) eines Umrichters einer Stromversorgung (S₅) oder eines Quellenzweigs und einem Dämpfungsmodul (DM₅) angeschlossen ist;
einen ersten mechanischen Schutzschalter (FS₅), der parallel zu dem Halbleiter-Schutzschalter (SS₅) geschaltet ist;
einen Energieabsorber (AC₅), der parallel zum Halbleiter-Schutzschalter (SS₅) geschaltet ist; und
eine Steuervorrichtung (controls), die mit dem Halbleiter-Schutzschalter (SS₅) und dem ersten mechanischen Schutzschalter (FS₅) gekoppelt ist, wobei die Steuervorrichtung (controls), wenn ein durch den Umrichter fließender Strom größer als sein Sicherheitsstrom ist, den ersten mechanischen Schutzschalter (FS₅) steuert, um ihn zu trennen, und den Halbleiter-Schutzschalter (SS₅) steuert, um ihn zu schließen
**dadurch gekennzeichnet, dass** der Umrichter einen Kondensator (Cs) umfasst, der Kondensator (C₅) zwischen ein zweites Ausgangsende (b₁₂) des Umrichters und das Dämpfungsmodul (DM₅) geschaltet ist, ein erster Verbindungspunkt (a₁) zwischen dem ersten mechanischen Schutzschalter (FS₅) und dem Dämpfungsmodul (DM₅) besteht, und ferner ein erster Stromsensor (CS₅) zwischen dem ersten Verbindungspunkt (a₁) und dem Kondensator (Cs) geschaltet ist, wobei
wenn der erste Stromsensor (CS₅) feststellt, dass ein Entladestrom des Kondensators (C₅) größer ist als sein Schwellenwert, festgestellt wird, dass der durch den Umrichter fließende Strom größer ist als sein Sicherheitsstrom.

2. Hybrider Schutzschalter gemäß Anspruch 1, der ferner eine Schutzvorrichtung (P₅) umfasst, wobei ein erstes Eingangsende der Schutzvorrichtung (P₅) mit dem anderen Ende des Dämpfungsmoduls (DM₅) verbunden ist und ein zweites Eingangsende der Schutzvorrichtung (P₅) mit einem zweiten Ausgangsende (b₁₂) des Umrichters gekoppelt ist.

3. Hybrider Schutzschalter nach Anspruch 1, der ferner einen Schutzschalter umfasst, wobei ein erster Anschlusspunkt (a₂) zwischen dem ersten mechanischen Schutzschalter (FS₆₁) und dem Dämpfungsmodul (DM₆) besteht, der Schutzschalter zwischen dem ersten Anschlusspunkt (a₂) und einem zweiten Ausgangsende (b₂₂) des Umrichters angeschlossen ist, und ferner ein zweiter Stromsensor (CS₆) zwischen dem ersten mechanischen Schutzschalter (FS₆₁) und dem ersten Anschlusspunkt (a₂) angeschlossen ist, wobei
wenn ein vom zweiten Stromsensor (CS₆) erfasster Fehlerstrom größer ist als sein Schwellenwert, festgestellt wird, dass der durch den Umrichter fließende Strom größer ist als sein Sicherheitsstrom.

4. Hybrider Schutzschalter gemäß Anspruch 3, wobei der Schutzschalter eines der folgenden Elemente umfasst:
einen zweiten mechanischen Schutzschalter (FS₆₂);
eine Diode, wobei eine positive Elektrode der Diode mit einem zweiten Ausgangsende der Stromversorgung oder des Quellenzweigs verbunden ist und eine negative Elektrode der Diode mit dem ersten Verbindungspunkt verbunden ist; und
eine Halbleiter-Gleichrichterschaltung.

5. Stromkreisunterbrechungsverfahren, wobei das Stromkreisunterbrechungsverfahren durch den hybriden Schutzschalter gemäß einem der Ansprüche 1 bis 4 durchgeführt wird und das Stromkreisunterbrechungsverfahren den folgenden Schritt umfasst:
wenn der durch den Umrichter fließende Strom größer ist als sein Sicherheitsstrom, Auslösen der Steuervorrichtung zur Steuerung der Trennung des ersten mechanischen Schutzschalters und Steuern des Einschaltens des Halbleiter-Schutzschalters.

6. Stromkreisunterbrechungsverfahren gemäß Anspruch 5, wobei der Umrichter einen Kondensator umfasst, der Kondensator zwischen einem zweiten Ausgangsende des Umrichters und dem Dämpfungsmodul angeschlossen ist, ein erster Verbindungspunkt zwischen dem ersten mechanischen Stromkreisunterbrecher und dem Dämpfungsmodul besteht und ferner ein erster Stromsensor zwischen dem ersten Verbindungspunkt und dem Kondensator angeschlossen ist, wobei
das Stromkreisunterbrechungsverfahren ferner den folgenden Schritt umfasst:
wenn der erste Stromsensor feststellt, dass ein Entladestrom des Kondensators größer ist als sein Schwellenwert, Bestimmen, dass der durch den Umrichter fließende Strom größer ist als sein Sicherheitsstrom.

7. Stromkreisunterbrechungsverfahren nach Anspruch 5, wobei der hybride Schutzschalter ferner einen Stromkreisunterbrecher umfasst, ein erster Verbindungspunkt zwischen dem ersten mechanischen Schutzschalter und dem Dämpfungsmodul besteht, der Stromkreisunterbrecher zwischen dem ersten Verbindungspunkt und einem zweiten Ausgangsende des Umrichters angeschlossen ist, und ein zweiter Stromsensor ferner zwischen dem ersten mechanischen Schutzschalter und dem ersten Verbindungspunkt angeschlossen ist, wobei
das Stromkreisunterbrechungsverfahren ferner den folgenden Schritt umfasst:
wenn der vom zweiten Stromsensor erfasste Fehlerstrom größer als sein Schwellenwert ist, Bestimmen, dass der durch den Umrichter fließende Strom größer als sein Sicherheitsstrom ist.

8. Hybrides Stromkreisunterbrechungssystem, wobei das Stromkreisunterbrechungssystem den hybriden Schutzschalter gemäß einem der Ansprüche 1 bis 4 umfasst, und das hybride Stromkreisunterbrechungssystem Folgendes umfasst:
einen Prozessor; und
einen mit dem Prozessor gekoppelten Speicher, wobei der Speicher Anweisungen speichert und die Anweisungen, wenn sie von dem Prozessor ausgeführt werden, die elektronische Vorrichtung veranlassen, eine Aktion auszuführen, und die Aktion Folgendes umfasst:
wenn der durch den Umrichter fließende Strom größer ist als sein Sicherheitsstrom, Auslösen der Steuervorrichtung zur Steuerung der Trennung des ersten mechanischen Schutzschalters und Steuern des Einschaltens des Halbleiter-Schutzschalters.

9. Hybrides Stromkreisunterbrechungssystem nach Anspruch 8, wobei der Umrichter einen Kondensator umfasst, der Kondensator zwischen einem zweiten Ausgangsende des Umrichters und dem Dämpfungsmodul angeschlossen ist, ein erster Verbindungspunkt zwischen dem ersten mechanischen Stromkreisunterbrecher und dem Dämpfungsmodul besteht und ferner ein erster Stromsensor zwischen dem ersten Verbindungspunkt und dem Kondensator angeschlossen ist, wobei
die Aktion ferner Folgendes umfasst:
wenn der erste Stromsensor feststellt, dass ein Entladestrom des Kondensators größer ist als sein Schwellenwert, Bestimmen, dass der durch den Umrichter fließende Strom größer ist als sein Sicherheitsstrom.

10. Hybrides Stromkreisunterbrechungssystem nach Anspruch 8, wobei der hybride Schutzschalter ferner einen Stromkreisunterbrecher umfasst, ein erster Verbindungspunkt zwischen dem ersten mechanischen Schutzschalter und dem Dämpfungsmodul besteht, der Stromkreisunterbrecher zwischen dem ersten Verbindungspunkt und einem zweiten Ausgangsende des Umrichters angeschlossen ist, und ein zweiter Stromsensor ferner zwischen dem ersten mechanischen Schutzschalter und dem ersten Verbindungspunkt angeschlossen ist, wobei die Aktion ferner Folgendes umfasst:
wenn ein vom zweiten Stromsensor erfasster Fehlerstrom größer als sein Schwellenwert ist, Bestimmen, dass der durch den Umrichter fließende Strom größer als sein Sicherheitsstrom ist.

## Revendications

1. Disjoncteur hybride, comprenant :
un disjoncteur à semi-conducteurs (SS₅), connecté entre une première extrémité de sortie (bu) d'un convertisseur d'une alimentation électrique (S₅) ou d'une branche source et un module d'amortissement (DM₅) ;
un premier disjoncteur mécanique (FSs), connecté en parallèle au disjoncteur à semi-conducteurs (SS₅) ;
un absorbeur d'énergie (AC₅) , connecté en parallèle au disjoncteur à semi-conducteurs (SS₅) ; et
un appareil de commande (controls), couplé au disjoncteur à semi-conducteurs (SS₅) et le premier disjoncteur mécanique (FSs), dans lequel, lorsqu'un courant circulant à travers le convertisseur est supérieur à son courant de sécurité, l'appareil de commande (controls) commande la déconnexion du premier disjoncteur mécanique (FSs), et commande la fermeture du disjoncteur à semi-conducteurs (SS₅)
**caractérisé en ce que** le convertisseur comprend un condensateur (C₅), le condensateur (C₅) étant connecté entre une deuxième extrémité de sortie (b₁₂) du convertisseur et le module d'amortissement (DM₅), un premier point de connexion (a₁) existant entre le premier disjoncteur mécanique (FS₅) et le module d'amortissement (DM₅), et un premier capteur de courant (CS₅) est en outre connecté entre le premier point de connexion (a₁) et le condensateur (Cs), où
lorsque le premier capteur de courant (CS₅) détecte qu'un courant de décharge du condensateur (C₅) est supérieur à son seuil, il est déterminé que le courant circulant à travers le convertisseur est supérieur à son courant de sécurité.

2. Disjoncteur hybride selon la revendication 1, comprenant en outre un appareil de protection (P₅), dans lequel une première extrémité d'entrée de l'appareil de protection (P₅) est connectée à l'autre extrémité du module d'amortissement (DM₅), et une deuxième extrémité d'entrée de l'appareil de protection (P₅) est couplée à une deuxième extrémité de sortie (b₁₂) du convertisseur.

3. Disjoncteur hybride selon la revendication 1, comprenant en outre un disjoncteur, dans lequel un premier point de connexion (a₂) existe entre le premier disjoncteur mécanique (FS₆₁) et le module d'amortissement (DM₆), le disjoncteur étant connecté entre le premier point de connexion (a₂) et une deuxième extrémité de sortie (b₂₂) du convertisseur, et un deuxième capteur de courant (CS₆) étant en outre connecté entre le premier disjoncteur mécanique (FS₆₁) et le premier point de connexion (a₂), où
lorsqu'un courant de défaut détecté par le deuxième capteur de courant (CS₆) est supérieur à son seuil, il est déterminé que le courant circulant à travers le convertisseur est supérieur à son courant de sécurité.

4. Disjoncteur hybride selon la revendication 3, dans lequel le disjoncteur comprend l'un quelconque parmi :
un deuxième disjoncteur mécanique (FS₆₂) ;
une diode, dans laquelle une électrode positive de la diode est couplée à une deuxième extrémité de sortie de l'alimentation électrique ou de la branche source, et une électrode négative de la diode est connectée au premier point de connexion ; et
un circuit redresseur à semi-conducteurs.

5. Procédé de coupure de circuit, lequel procédé de coupure de circuit est exécuté par le disjoncteur hybride selon l'une quelconque des revendications 1 à 4, et le procédé de coupure de circuit comprend l'étape suivante :
lorsque le courant circulant à travers le convertisseur est supérieur à son courant de sécurité, déclenchement de l'appareil de commande pour commander la déconnexion du premier disjoncteur mécanique, et commander la fermeture du disjoncteur à semi-conducteurs.

6. Procédé de coupure de circuit selon la revendication 5, dans lequel le convertisseur comprend un condensateur, le condensateur étant connecté entre une deuxième extrémité de sortie du convertisseur et le module d'amortissement, un premier point de connexion existant entre le premier disjoncteur mécanique et le module d'amortissement, et un premier capteur de courant étant en outre connecté entre le premier point de connexion et le condensateur, où le procédé de coupure de circuit comprenant en outre l'étape suivante :
lorsque le premier capteur de courant détecte qu'un courant de décharge du condensateur est supérieur à son seuil, détermination du fait que le courant circulant à travers le convertisseur est supérieur à son courant de sécurité.

7. Procédé de coupure de courant selon la revendication 5, dans lequel le disjoncteur hybride comprend en outre un disjoncteur, un premier point de connexion existant entre le premier disjoncteur mécanique et le module d'amortissement, le disjoncteur étant connecté entre le premier point de connexion et une deuxième extrémité de sortie du convertisseur, et un deuxième capteur de courant étant en outre connecté entre le premier disjoncteur mécanique et le premier point de connexion, le procédé de coupure de circuit comprenant en outre l'étape suivante :
lorsque le courant de défaut détecté par le deuxième capteur de courant est supérieur à son seuil, détermination du fait que le courant circulant à travers le convertisseur est supérieur à son courant de sécurité.

8. Système de disjoncteur hybride, dans lequel système de disjoncteur comprend le disjoncteur hybride selon l'une quelconque des revendications 1 à 4, et le système de disjoncteur hybride comprend :
un processeur ; et
une mémoire couplée au processeur, la mémoire stockant des instructions qui, lorsqu'elles sont exécutées par le processeur, font exécuter une action au dispositif électronique, laquelle action comprend :
lorsque le courant circulant à travers le convertisseur est supérieur à son courant de sécurité, le déclenchement de l'appareil de commande pour commander la déconnexion du premier disjoncteur mécanique, et commander la fermeture du disjoncteur à semi-conducteurs.

9. Système de disjoncteur hybride selon la revendication 8, dans lequel le convertisseur comprend un condensateur, le condensateur étant connecté entre une deuxième extrémité de sortie du convertisseur et le module d'amortissement, un premier point de connexion existant entre le premier disjoncteur mécanique et le module d'amortissement, et un premier capteur de courant étant en outre connecté entre le premier point de connexion et le condensateur,
l'action comprenant en outre :
lorsque le premier capteur de courant détecte qu'un courant de décharge du condensateur est supérieur à son seuil, la détermination du fait que le courant circulant à travers le convertisseur est supérieur à son courant de sécurité.

10. Système de disjoncteur hybride selon la revendication 8, dans lequel le disjoncteur hybride comprend en outre un disjoncteur, un premier point de connexion existant entre le premier disjoncteur mécanique et le module d'amortissement, le disjoncteur étant connecté entre le premier point de connexion et une deuxième extrémité de sortie du convertisseur, et un deuxième capteur de courant étant en outre connecté entre le premier disjoncteur mécanique et le premier point de connexion, l'action comprenant en outre :
lorsqu'un courant de défaut détecté par le deuxième capteur de courant est supérieur à son seuil, la détermination du fait que le courant circulant à travers le convertisseur est supérieur à son courant de sécurité.
